# EUROPÄISCHE PATENTSCHRIFT

(11) **EP 4 023 123 B1**
(45) Veröffentlichungstag und Bekanntmachung des Hinweises auf die Patenterteilung: **17.09.2025**
(21) Anmeldenummer: 21175972.5
(22) Anmeldetag: 26.05.2021
(51) Int. Cl.: A47K 11/02, A47K 11/12

(54) **BAUSATZ ZUM UMRÜSTEN EINER KASSETTENTOILETTE IN EINE TROCKENTRENNTOILETTE**
KIT FOR CONVERTING A CASSETTE TOILET INTO A DRY SEPARATION TOILET
KIT PERMETTANT DE TRANSFORMER DES TOILETTES À CASSETTE EN TOILETTES SÈCHES À SÉPARATION

(30) Priorität: 04.01.2021 DE 202021100010 U
(43) Veröffentlichungstag der Anmeldung: 06.07.2022
(73) Patentinhaber: Mahn, Sven, 22339 Hamburg (DE)
(72) Erfinder: Mahn, Sven, 22339 Hamburg (DE)
(74) Vertreter: Eisenführ Speiser

(56) Entgegenhaltungen:
- JP-A- 2007 151 905
- JP-A- 2010 260 039
- US-B2- 9 648 996

## Beschreibung

Die vorliegende Erfindung betrifft einen Bausatz zum Umrüsten einer Kassettentoilette, die ein Gehäuse, ein Sitzschüsselteil und eine darunter, in einem Kassettenaufnahmeraum des Gehäuses befindliche Kassette aufweist, in eine Trockentrenntoilette und ein Verfahren für eine solche Umrüstung.

In Wohnmobilen und Wohnwagen sind festinstallierte Toiletten mittlerweile der Regelfall. In den meisten Fällen handelt es sich dabei um eine sogenannte Kassettentoilette. Eine Kassettentoilette weist ein Gehäuse mit einem darauf montierten Sitzschüsselteil auf, unter dem sich in dem Gehäuse in einem Kassettenaufnahmehohlraum eine Kassette zur Aufnahme der von dem Sitzschüsselteil aufgenommenen Exkremente befindet, die mittels Wasserspülung aus dem Sitzschüsselteil in die Kassette gespült werden. Der Kassettenhohlraum ist über eine an der Außenwand des Wohnmobils vorgesehene aufklappbare Serviceklappe zugänglich, so dass bei Bedarf die Kassette entnommen und deren Inhalt an einer dafür vorgesehenen Stelle entsorgt werden kann.

Daneben sind im Campingbereich und auf dem Gebiet mobiler Toiletten sogenannte Trenntoiletten bekannt, wie zum Beispiel in DE 20 2019 005 509 U1 und in WO 2014/022873 A3 beschrieben. Die Funktionsweise einer Trenntoilette beruht darauf, die flüssigen Exkremente (Urin) separat von den festen Exkrementen (Fäzes) aufzufangen und jeweils in separaten Behältern zu lagern. Dazu weist die Trenntoilette in einem vorderen Bereich (der Begriff vorderer und hinterer Bereich bezieht sich dabei auf die Perspektive einer auf dem Toilettensitz sitzenden Person) einen Urinsammelbereich auf, in dem Urin gesammelt wird, das dann in einen Urintank abfließt. In einem hinteren Bereich unter dem Toilettensitz befindet sich ein Fäzes-Aufnahmebereich, der unten ist und aus dem Fäzes durch die Schwerkraftwirkung in einen oben offenen, darunter befindlichen Fäzes-Behälter fallen. Es gibt Trenntoiletten, die auch eine Spülung verwenden, aber auch solche, die ohne Wasserspülung arbeiten und alleine durch die Trennung der festen und der flüssigen Phasen und deren Sammlung in separaten Behältern funktionieren, wobei solche Trenntoiletten auch als Trockentrenntoiletten bezeichnet werden.

JP 2010 260039 A offenbart ein Toilettensystem, das das Vorhandensein von Wasser nicht voraussetzt. Das Toilettensystem weist zwei separate Behälter auf, wobei in einem Behälter Urin und in dem anderen Behälter Fäzes gesammelt wird. Ziel von JP 2010 260039 A ist es, den Inhalt der beiden Behälter derart zu erhitzen, dass der Inhalt entfeuchtet und fermentiert wird.

US 9 648 996 B2 offenbart eine Trockentrenntoilette mit separaten Behältern, wobei in einem Behälter Urin und in dem anderen Behälter Fäzes gesammelt wird. In den Behältern befinden sich Mikroben, die Pathogene abtöten und/oder Gerüche reduzieren. Die Toilette ist isoliert, so dass es im Inneren der Toilette und damit in den Behältern wärmer wird, so dass die Mikroben die Pathogene schneller abtöten.

JP 2007 151905 A offenbart eine Trockentrenntoilette mit separaten Behältern, wobei in einem Behälter Urin und in dem anderen Behälter Fäzes gesammelt wird. Das Toilettensystem ist außerdem mit einem speziellen Mechanismus im Sitzschüsselteil ausgestattet, der verhindert, dass Urin in den Fäzes-Behälter gelangt.

Aus der Umbauanleitung für eine Thetford c200ws, abrufbar unter https://womo.blog/2024/03/15/diy-umbau-wohnmobiltoilette-zur-trenntoilette-von-eberhardbaier/, ist ein Umbausatz bekannt, mit dem eine Kassettentoilette in eine Trenntoilette umgebaut werden kann. Bei diesem Umbausatz wird eine kostengünstige Trennwand in das Becken der Kassettentoilette eingeklebt und eine Öffnung in den vorderen Teil des Beckens gebohrt, an die ein Abflussschlauch angeschlossen werden kann. Im Kassettenschacht werden zwei separate Behälter untergebracht. Der Verschlussmechanismus zum Auffangbehälter bleibt erhalten. Diese Umbaumaßnahme wird als problemlos funktionierend und kostengünstig beschrieben.

Trockentrenntoiletten haben eine Reihe von Vorteilen, nämlich deutlich längere Entsorgungsintervalle, einfache Handhabungsweise bei der Entsorgung, Wassereinsparung durch Verzicht auf Spülwasser, geringere Geruchsbelästigung, Verzicht auf teure und gefährliche chemische Zusätze und einfache Reparaturmöglichkeiten.

Die Entsorgungsintervalle für eine Trockentrenntoilette sind erheblich verlängert, da durch den Verzicht auf Spülwasser das Gesamtvolumen der temporär zu lagernden Exkremente deutlich vermindert ist. Bei ausreichender Größe des Fäzes-Behälters sind Entsorgungsintervalle von mehr als einer Woche oder mehreren Wochen möglich.

Der Entsorgungsvorgang ist sehr einfach, da der Urin in normale Toiletten, Gullys oder in Abflüssen entsorgt werden kann. Der Inhalt des Fäzes-Behälters kann grundsätzlich im normalen Müll entsorgt werden; alternativ kann der Inhalt des Fäzes-Behälters auch kompostiert werden. In diesem Fall ist es zweckmäßig, dass in dem Fäzes-Behälter ein kompostierbarer Beutel eingelegt wird, der am Ende des Entsorgungsintervalls dann einfach entnommen und der Kompostierstelle zugeführt wird.

Der geringere Wasserverbrauch von Trockentrenntoiletten ist im Wohnmobil-und Wohnwagenbereich ebenfalls ein beachtlicher Vorteil, da dadurch die Intervalle zwischen Auffüllungen des Wassertanks des Wohnmobils verlängert werden.

Es gibt keine merkliche Geruchsbelästigung mehr, zumindest wenn der Urintank mit einer Geruchssperre versehen ist. Da die Fäzes-Anteile der Exkremente sich nicht mit dem Urin mischen, trocknen sie schnell und erzeugen dann keine unangenehmen Gerüche mehr.

In Kassettentoiletten werden üblicherweise zur Unterdrückung der Geruchsentwicklung chemische Zusätze hinzugefügt, wobei dafür geeignete chemische Zusätze aber toxisch und hautreizend sind. Der Einsatz solcher chemischen Zusätze entfällt bei Trockentrenntoiletten. Bei Trockentrenntoiletten kann zur Förderung der Kompostierung von Zeit zu Zeit ein Einstreumittel in den Fäzes-Behälter zugegeben werden, wobei dafür geeignete Einstreumittel nicht toxisch sind.

Der Aufbau von Trockentrenntoiletten ist mechanisch relativ einfach und ohne bewegliche Teile zu realisieren. Daher besteht eine verringerte Gefahr von Defekten und eventuell auftretende Schäden sind in der Regel mit geringem Reparaturaufwand zu beheben, um die Funktionsfähigkeit der Toilette zu erhalten.

Viele Benutzer von Wohnmobilen und Wohnanhängern würden sich daher gerne die Vorteile einer Trockentrenntoilette zunutze machen. Allerdings scheuen die meisten den Aufwand, eine fest vorinstallierte Kassettentoilette zu demontieren und diese dann durch eine Trenntoilette zu ersetzen.

Es ist daher Aufgabe der vorliegenden Erfindung, einen Bausatz zur Umrüstung einer Kassettentoilette in eine Trockentrenntoilette bereitzustellen, mit dem eine Kassettentoilette in eine Trockentrenntoilette umgerüstet werden kann, ohne das fest in dem Fahrzeug montierte Gehäuse der Kassettentoilette demontieren zu müssen.

Zur Lösung dieser Aufgabe dient der Bausatz mit den Merkmalen des Anspruchs 1, das Verfahren mit den Merkmalen des Anspruchs 6 und die Verwendung mit den Merkmalen des Anspruchs 7. Vorteilhafte Ausführungsformen der Erfindung sind in den Unteransprüchen aufgeführt.

Der Bausatz zum Umrüsten der Kassettentoilette weist ein Sitzschüsselteil, eine Behälteranordnung und einen Schlauch auf, die dazu ausgestaltet sind, um nach Entfernung des ursprünglichen Sitzschüsselteils der Kassettentoilette von deren Gehäuse und Entnahme der Kassette aus dem Gehäuse in bzw. an dem Gehäuse der Kassettentoilette anzubringen sind.

Das Sitzschüsselteil des Bausatzes, das dann an dem Gehäuse der Kassettentoilette zu montieren ist, setzt sich aus einem im montierten Zustand vorderen Urinsammelabschnitt mit einer Auslassöffnung und einem hinteren, nach unten offenen Fäzes-Aufnahmeabschnitt zusammen. Unter Sitzschüsselteil wird in der vorliegenden Beschreibung der gesamte Sitzschüsselaufbau oder zumindest der Teil davon, der den Hauptkorpus der Schüssel umfasst, verstanden.

Das Sitzschüsselteil des Bausatzes, das dann an dem Gehäuse der Kassettentoilette zu montieren ist, setzt sich aus einem im montierten Zustand vorderen Urinsammelabschnitt mit einer Auslassöffnung und einem hinteren, nach unten offenen Fäzes-Aufnahmeabschnitt zusammen. Unter Sitzschüsselteil wird in der vorliegenden Beschreibung der gesamte Sitzschüsselaufbau oder zumindest der Teil davon, der den Hauptkorpus der Schüssel umfasst, verstanden.

Die Behälteranordnung des Bausatzes ist zur Unterbringung im Kassettenaufnahmeraum des Gehäuses der Kassettentoilette ausgestaltet und enthält einen Fäzes-Behälter mit einer oberen Öffnung und einen Urintank mit einer Tanköffnung, wobei die Behälteranordnung so ausgestaltet ist, dass nach deren Einbringung in den Kassettenaufnahmeraum die obere Öffnung des Fäzes-Behälters unter der unteren Öffnung des Fäzes-Aufnahmeabschnitts des Sitzschüsselteils liegt. Der Schlauch des Bausatzes ist zur Verbindung mit der Auslassöffnung des Urinsammelabschnitts des Sitzschüsselteils und zur Verbindung mit der Tanköffnung des Urintanks ausgestaltet.

Die Abmessungen und Formen des erfindungsgemäßen Bausatzes sind an die Abmessungen und Formen der umzurüstenden Kassettentoilette angepasst.

In einer bevorzugten Ausführungsform hat der Urinsammelabschnitt im Wesentlichen Trichterform mit einer umlaufenden Seitenwand, die sich zur Auslassöffnung verjüngt, wobei die Auslassöffnung im tiefsten Bereich der Trichterform liegt. Vorzuweise ist die Trichterform des Urinsammelabschnitts in der Weise asymmetrisch, dass die umlaufende Seitenwand in dem an den Fäzes-Aufnahmeabschnitt angrenzenden Bereich steiler,
d.h. unter einem kleineren Winkel zur Vertikalen verläuft als in dem von dem Fäzes-Aufnahmeabschnitt abgewandten vorderen Bereich.

In einer bevorzugten Ausführungsform hat der Fäzes-Aufnahmeabschnitt die Form eines Hohlzylindersegments, vorzugsweise die eines Halbzylinders, wobei die offene Seite des Hohlzylindersegments dem Urinsammelabschnitt zugewandt ist.

Erfindungsgemäß ist das Sitzschüsselteil als integrales Bauteil ausgebildet, d.h. der Fäzes-Aufnahmeabschnitt und der Urinsammelabschnitt sind einstückig ausgebildet.

In einer Ausführungsform ist die Behälteranordnung als integrales Bauteil mit dem Urintank in einem Abschnitt und dem Fäzes-Behälter in einem daran anschließenden Abschnitt ausgebildet.

Durch die Erfindung wird außerdem ein Verfahren zum Umrüsten einer Kassettentoilette, die ein Gehäuse, ein Sitzschüsselteil und eine darunter, in einem Kassettenaufnahmeraum des Gehäuses befindliche Kassette aufweist, in eine Trockentrenntoilette bereitgestellt. Bei dem Verfahren wird in einem ersten Schritt das Sitzschüsselteil der Kassettentoilette durch ein Sitzschüsselteil ersetzt, das sich aus einem vorderen Urinsammelabschnitt mit einer Auslassöffnung und einem hinteren Fäzes-Aufnahmeabschnitt mit oberer und unterer Öffnung zusammensetzt. In einem zweiten Schritt wird die Kassette der Kassettentoilette durch eine Behälteranordnung ersetzt. Die Behälteranordnung ist zur Unterbringung im Kassettenaufnahmeraum ausgestaltet und weist einen Fäzes-Behälter mit einer oberen Öffnung und einen Urintank mit einer Tanköffnung auf. Die Behälteranordnung ist ferner so ausgestaltet, dass nach deren Einbringung in den Kassettenaufnahmeraum die obere Öffnung des Fäzes-Behälters unter der unteren Öffnung des Fäzes-Aufnahmeabschnitts liegt. In einem dritten Schritt wird ein Schlauch mit der Auslassöffnung des Urinsammelabschnitts des Sitzschüsselteils und mit der Tanköffnung des Urintanks verbunden.

Schließlich wird durch die Erfindung der erfindungsgemäße Bausatz zum Umrüsten einer Kassettentoilette in eine Trockentrenntoilette verwendet.

Die Erfindung wird im Folgenden anhand eines Ausführungsbeispiels in den Zeichnungen beschrieben, in denen:

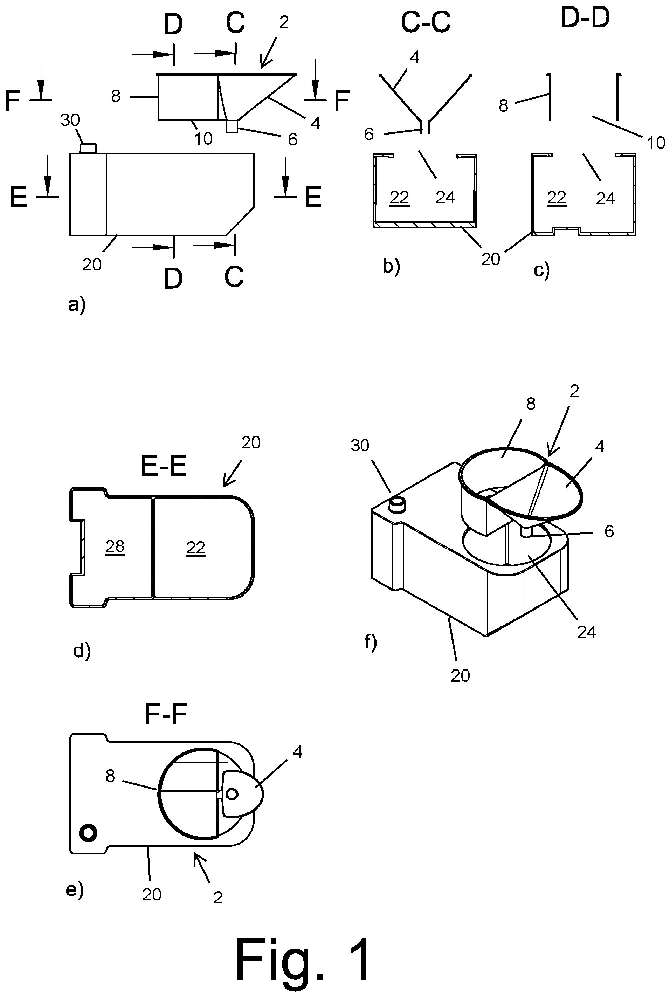

Fig. 1 a) - f) verschiedene Ansichten von Bestandteilen eines erfindungsgemäßen Bausatzes sind, wobei
Fig. 1 a) eine seitliche Draufsicht auf Sitzschüsselteil und Behälteranordnung ist,
Fig. 1 b) einen Querschnitt durch die in Fig. 1 a) gezeigte Ebene C-C zeigt,
Fig. 1 c) einen Querschnitt durch Sitzschüsselteil und Behälteranordnung in der Ebene D-D aus Fig. 1 a) zeigt,
Fig. 1 d) einen Querschnitt durch die Behälteranordnung durch die Ebene E-E aus Fig. 1a) zeigt,
Fig. 1 e) einen Querschnitt durch das Sitzschüsselteil 2 durch die Ebene F-F aus Fig. 1 a) und eine Draufsicht auf die Behälteranordnung 20 von oben zeigt,
Fig. 1 f) eine perspektivische Ansicht von Sitzschüsselteil und Behälteranordnung zeigt, und
Fig. 2 a) - d) verschiedene Ansichten von Komponenten einer herkömmlichen Kassettentoilette zeigen, wobei die gezeigten Komponenten durch die entsprechenden Komponenten des erfindungsgemäßen Bausatzes aus Fig. 1 zu ersetzten sind, wenn die herkömmliche Kassettentoilette in eine Trockentrenntoilette umgerüstet werden soll, wobei

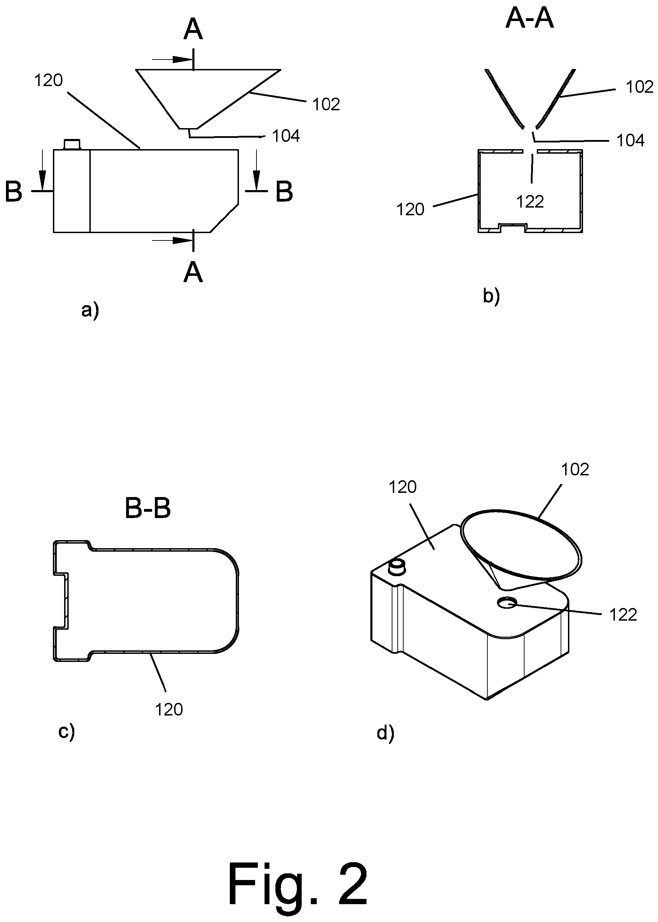

Fig. 2 a) eine seitliche Draufsicht auf Sitzschüsselteil und Kassette der Kassettentoilette ist,
Fig. 2 b) einen Querschnitt durch die in Fig. 2 a) gezeigte Ebene A-A zeigt,
Fig. 2 c) einen Querschnitt der Kassette durch die in Fig. 2
   a) gezeigte Ebene B-B zeigt, und
Fig. 2 d) eine perspektivische Ansicht von Sitzschüsselteil und Kassette zeigt.

Es wird zunächst mit Bezug auf Fig. 2 a) - d) die Komponenten einer herkömmlichen Kassettentoilette beschrieben, die durch Teile des erfindungsgemäßen Bausatzes zu ersetzten sind, um die Kassettentoilette in eine Trockentrenntoilette umzurüsten. Eine Kassettentoilette umfasst ein fest in dem Wohnmobil installiertes Gehäuse (nicht gezeigt), an dem ein Sitzschüsselteil 102 montiert ist. Das Sitzschüsselteil 102 umfasst die eigentliche Schüssel, in der die Exkremente und später Spülwasser aufgenommen werden. Das Sitzschüsselteil 102 hat eine Auslassöffnung 104.

In dem nicht gezeigten Gehäuse der Kassettentoilette befindet sich in einem Kassettenaufnahmeraum eine Kassette 120, die unterhalb des an dem Gehäuse montierten Sitzschüsselteils 102 angeordnet ist. Die Kassette 120 ist in dem Kassettenaufnahmeraum beweglich gelagert, so dass sie nach Öffnen einer Zugangsklappe in der Außenwand des Wohnmobils aus dem Kassettenaufnahmeraum herausgezogen werden kann. Die Kassette 120 hat eine einzige Kassettenöffnung 122, die über eine nicht dargestellte Verbindung mit der Auslassöffnung 104 des Sitzschüsselteils 102 verbunden ist. Bei Benutzung der Kastentoilette werden Urin und Fäzes zusammen in dem Sitzschüsselteil 102 aufgenommen und daraus unter Mitwirkung von Spülwasser durch die Auslassöffnung 104 in das Innere der Kassette 120 befördert.

Mit Bezug auf Fig. 1 a) - f) werden nun entsprechende Komponenten des erfindungsgemäßen Bausatzes beschrieben, die zur Umrüstung einer Kassettentoilette in eine Trockentrenntoilette gegen die entsprechenden in Fig. 2 gezeigten Komponenten auszutauschen sind. Es ist zu beachten, dass in den Fig. 1 a) - f) die Behälteranordnung 20 und das Sitzschüsselteil 2 in ihrer relativen Anordnung zueinander gezeigt sind, die sie einnehmen, wenn das Sitzschüsselteil 2 an dem Gehäuse (nicht gezeigt) der Kassettentoilette montiert ist und die Behälteranordnung 20 in den Kassettenaufnahmeraum des Gehäuses (nicht gezeigt) der Kassettentoilette eingebracht ist.

Der Bausatz umfasst ein Sitzschüsselteil 2, das sich zur Trennung von Urin und Fäzes aus einem Urinsammelabschnitt 4 und einem Fäzes-Aufnahmeabschnitt 8 zusammensetzt, wobei der Urinsammelabschnitt 4 in einem vorderen Bereich und der Fäzes-Aufnahmeabschnitt 8 in einem hinteren Bereich des Sitzschüsselteils 2 liegt (die Begriffe vorderer Bereich und hinterer Bereich beziehen sich auf die Perspektive eines auf dem Sitzschüsselteil 2 sitzenden Benutzers der Toilette).

Der Urinsammelabschnitt 4 hat im Wesentlichen Trichterform,
d.h. er wird seitlich von einer umlaufenden Seitenwand umschlossen, die sich nach unten zu der Auslassöffnung 6 hin verjüngt. Wie die Draufsicht in Fig. 1 a) zeigt ist diese Trichterform asymmetrisch in dem Sinne, dass die Seitenwand der Trichterform, die dem Fäzes-Aufnahmeabschnitt 8 zugewandt ist, näher an der Vertikalen liegt als der gegenüberliegende Seitenwandbereich im vorderen Bereich des Urinsammelabschnitts 4.

An den Urinsammelabschnitt 4 schließt sich der Fäzes-Aufnahmeabschnitt 8 an, der oben offen ist und unten an einer unteren Öffnung 10 ebenfalls vollständig offen ist.

Wie in Fig. 1 d) zu erkennen, wird die Behälteranordnung 20 durch eine Trennwand in einen Urintank 28 und einen Fäzes-Behälter 22 unterteilt. Wie in den Fig. 1 b), c) und f) zu erkennen, hat der Fäzes-Behälter 22 eine obere Öffnung 24.

Die Behälteranordnung 20 ist im Verhältnis zum Sitzschüsselteil 2 so ausgestaltet, dass die Behälteranordnung 20 nach Einbringung in den Kassettenaufnahmeraum bei montiertem Sitz schüsselteil 2 so unter diesem liegt, dass die obere Öffnung 24 des Fäzes-Behälters 22 zu der unteren Öffnung 10 des Fäzes-Aufnahmeabschnitts 8 ausgerichtet liegt, so dass Fäzes durch den Fäzes-Aufnahmeabschnitt direkt in den Fäzes-Behälter 22 fallen.

Zu dem Bausatz gehört schließlich noch ein in Fig. 1 nicht dargestellter Schlauch, der dazu ausgestaltet ist, mit einem Ende mit der Auslassöffnung 6 des Urinsammelabschnitts 4 verbunden zu werden und an seinem anderen Ende mit einer Tanköffnung 30 des Urintanks 28 verbunden zu werden.

Die in den Darstellungen von Fig. 1 dargestellte Ausführungsform des Bausatzes zeigt das Sitzschüsselteil 2 als integrales Bauteil gemäß der Erfindung, das sich aus einem Urinaufnahmeabschnitt 4 und einem Fäzes-Aufnahmeabschnitt 8 zusammensetzt.

In der Darstellung von Fig. 1 d) ist auch zu erkennen, dass die Behälteranordnung 20 in diese Ausführungsform als integrales Bauteil ausgeführt ist, das sich aus einem den Fäzes-Behälter 22 bildenden Abschnitt und einem den Urintank 28 bildenden Abschnitt zusammensetzt.

## Patentansprüche

1. Bausatz zum Umrüsten einer Kassettentoilette, die ein Gehäuse, ein Sitzschüsselteil und eine darunter, in einem Kassettenaufnahmeraum des Gehäuses befindliche Kassette aufweist, in eine Trockentrenntoilette, wobei der Bausatz aufweist:
ein Sitzschüsselteil (2), das sich aus einem vorderen Urinsammelabschnitt (4) mit einer Auslassöffnung (6) und einem hinteren Fäzes-Aufnahmeabschnitt (8) mit oberer und unterer Öffnung zusammensetzt, wobei der Fäzes-Aufnahmeabschnitt (8) und der Urinsammelabschnitt (4) einstückig ausgebildet sind,
eine Behälteranordnung (20), die zur Unterbringung im Kassettenaufnahmeraum ausgestaltet ist und einen Fäzes-Behälter (22) mit einer oberen Öffnung (24) und einen Urintank (28) mit einer Tanköffnung (30) enthält, wobei die Behälteranordnung (20) so ausgestaltet ist, dass nach deren Einbringung in den Kassettenaufnahmeraum die obere Öffnung (24) des Fäzes-Behälters (22) unter der unteren Öffnung (10) des Fäzes-Aufnahmeabschnitts (8) liegt, und
einen Schlauch, der zur Verbindung mit der Auslassöffnung (6) des Urinsammelabschnitts des Sitzschüsselteils (2) und zur Verbindung mit der Tanköffnung (30) des Urintanks (28) ausgestaltet ist.

2. Bausatz nach Anspruch 1, wobei der Urinsammelabschnitt (4) im Wesentlichen Trichterform mit einer umlaufenden Seitenwand hat, die sich zur Auslassöffnung (6) hin verjüngt, wobei die Auslassöffnung (6) im tiefsten Bereich der Trichterform liegt.

3. Bausatz nach Anspruch 2, wobei die Trichterform des Urinsammelabschnitts (4) in der Weise asymmetrisch ist, dass die umlaufende Seitenwand der Trichterform in dem an den Fäzes-Aufnahmeabschnitt (8) angrenzenden Bereich unter einem kleineren Winkel zur Vertikalen verläuft als in dem von dem Fäzes-Aufnahmeabschnitt (8) abgewandten Bereich.

4. Bausatz nach einem der vorhergehenden Ansprüche, wobei der Fäzes-Aufnahmeabschnitt (8) die Form eines Hohlzylindersegments hat, vorzugsweise die Form eines Halbzylinders.

5. Bausatz nach einem der vorhergehenden Ansprüche, wobei Behälteranordnung (20) in einem Stück mit dem Urintank (28) in einem Abschnitt und dem Fäzes-Behälter (22) in einem darin anschließenden Abschnitt ausgebildet ist.

6. Verfahren zum Umrüsten einer Kassettentoilette, die ein Gehäuse, ein Sitzschüsselteil (102) und eine darunter, in einem Kassettenaufnahmeraum des Gehäuses befindliche Kassette (120) aufweist, in eine Trockentrenntoilette,
wobei das Sitzschüsselteil (102) der Kassettentoilette durch ein Sitzschüsselteil (2) ersetzt wird, das sich aus einem vorderen Urinsammelabschnitt (4) mit einer Auslassöffnung (6) und einem hinteren Fäzes-Aufnahmeabschnitt (8) mit oberer und unterer Öffnung zusammensetzt, wobei der Fäzes-Aufnahmeabschnitt (8) und der Urinsammelabschnitt (4) einstückig ausgebildet sind,
die Kassette (120) der Kassettentoilette durch eine Behälteranordnung (20) ersetzt wird, wobei die Behälteranordnung (20) zur Unterbringung im Kassettenaufnahmeraum ausgestaltet ist und einen Fäzes-Behälter (22) mit einer oberen Öffnung (24) und einen Urintank (28) mit einer Tanköffnung (30) aufweist, wobei die Behälteranordnung (20) ferner so ausgestaltet ist, dass nach deren Einbringung in den Kassettenaufnahmeraum die obere Öffnung (24) des Fäzes-Behälters (22) unter der unteren Öffnung (10) des Fäzes-Aufnahmeabschnitts (8) liegt, und
ein Schlauch mit der Auslassöffnung (6) des Urinsammelabschnitts (4) des Sitzschüsselteils (2) und mit der Tanköffnung (30) des Urintanks (28) verbunden wird.

7. Verwendung eines Bausatzes nach einem der vorhergehenden Ansprüchen 1 bis 5 zum Umrüsten einer Kassettentoilette in eine Trockentrenntoilette.

## Claims

1. Kit for converting a cassette toilet, which has a housing, a seat bowl part and a cassette located below it in a cassette receiving space of the housing, into a dry separation toilet, wherein the kit comprises:
a seat bowl part (2), which is composed of a front urine receiving section (4) with an outlet opening (6) and a rear faeces receiving section (8) with upper and lower openings, a container arrangement (20) which is designed for accommodation in the cassette receiving space and contains a faeces container (22) with an upper opening (24) and a urine tank (28), wherein
the container arrangement (20) is designed such that, after insertion into the cassette receiving space, the upper opening (24) of the faeces container (22) is located below the lower opening (10) of the faeces receiving section (8 and a hose designed to connect to the outlet opening (6) of the urine receiving section of the seat bowl part (2) and to connect to a tank opening (30) of the urine tank (28).

2. Kit according to claim 1, wherein the urine receiving section (4) is essentially funnel-shaped with a circumferential side wall that tapers toward the outlet opening (6), wherein the outlet opening (6) is located in the deepest area of the funnel shape.

3. Kit according to claim 2, wherein the funnel shape of the urine receiving section (4) is asymmetrical in such a way that the surrounding side wall of the funnel shape runs at a smaller angle to the vertical in the area adjacent to the faeces receiving section (8) than in the area facing away from the faeces receiving section (8).

4. Kit according to one of the preceding claims, wherein the faeces receiving section (8) has the shape of a hollow cylinder segment, preferably the shape of a half cylinder.

5. Kit according to one of the preceding claims, wherein the container arrangement (20) is formed in one piece with the urine tank (28) in one section and the faeces container (22) in an adjoining section.

6. Method for converting a cassette toilet, which has a housing, a seat bowl part (102) and a cassette (120) located thereunder in a cassette receiving space of the housing, into a dry separation toilet, wherein the seat bowl part (102) of the cassette toilet is replaced by a seat bowl part (2) comprising a front urine receiving section (4) with an outlet opening (6) and a rear faeces receiving section (8) with upper and lower openings, wherein the faeces receiving section (8) and the urine receiving section (4) are formed in one piece, the cassette (120) of the cassette toilet is replaced by a container arrangement (20), wherein the container arrangement (20) is designed for accommodation in the cassette receiving space and has a faeces container (22) with an upper opening (24) and a urine tank (28) with a tank opening (30), wherein the container arrangement (20) is further designed such that, after it has been inserted into the cassette receiving space, the upper opening (24) of the faeces container (22) is located below the lower opening (10) of the faeces receiving section (8), and a hose is connected to the outlet opening (6) of the urine receiving section (4) of the seat bowl part (2) and to the tank opening (30) of the urine tank (28).

7. Use of a kit according to any of the preceding claims 1 to 5 for converting a cassette toilet into a dry separation toilet.

## Revendications

1. Kit de transformation de toilettes à cassette, qui présentent un boîtier, une partie cuvette de siège et une cassette située en-dessous dans un espace de réception de cassette du boîtier, en toilettes sèches à séparation, dans lequel le kit présente :
une partie cuvette de siège (2), qui se compose d'une section de collecte d'urine (4) avant avec une ouverture de sortie (6) et d'une section de réception des matières fécales (8) arrière avec ouverture supérieure et inférieure, dans lequel la section de réception des matières fécales (8) et la section de collecte d'urine (4) sont réalisées d'un seul tenant,
un agencement de récipients (20), qui est configuré pour être logé dans l'espace de réception de cassette et contient un récipient à matières fécales (22) avec une ouverture supérieure (24) et un réservoir d'urine (28) avec une ouverture de réservoir (30), dans lequel l'agencement de récipients (20) est configuré de telle sorte qu'après son introduction dans l'espace de réception de cassette, l'ouverture supérieure (24) du récipient à matières fécales (22) se trouve sous l'ouverture inférieure (10) de la section de réception des matières fécales (8), et
un tuyau, qui est configuré pour être relié à l'ouverture de sortie (6) de la section de collecte d'urine de la partie cuvette de siège (2) et pour être relié à l'ouverture de réservoir (30) du réservoir d'urine (28).

2. Kit selon la revendication 1, dans lequel la section de collecte d'urine (4) a sensiblement une forme d'entonnoir avec une paroi latérale périphérique, qui se rétrécit vers l'ouverture de sortie (6), dans lequel l'ouverture de sortie (6) se trouve dans la zone la plus basse de la forme d'entonnoir.

3. Kit selon la revendication 2, dans lequel la forme d'entonnoir de la section de collecte d'urine (4) est asymétrique de telle manière que la paroi latérale périphérique de la forme d'entonnoir dans la zone adjacente à la section de réception des matières fécales (8) s'étend suivant un angle plus petit par rapport à la verticale que dans la zone opposée à la section de réception des matières fécales (8).

4. Kit selon l'une quelconque des revendications précédentes, dans lequel la section de réception des matières fécales (8) a la forme d'un segment de cylindre creux, de préférence la forme d'un demi-cylindre.

5. Kit selon l'une quelconque des revendications précédentes, dans lequel l'agencement de récipients (20) est réalisé d'un seul tenant avec le réservoir d'urine (28) dans une section et avec le récipient à matières fécales (22) dans une section s'y raccordant.

6. Procédé de transformation de toilettes à cassette, qui présentent un boîtier, une partie cuvette de siège (102) et une cassette (120) située en-dessous dans un espace de réception de cassette du boîtier, en toilettes sèches à séparation,
dans lequel
la partie cuvette de siège (102) des toilettes à cassette est remplacée par une partie cuvette de siège (2), qui se compose d'une section de collecte d'urine (4) avant avec une ouverture de sortie (6) et d'une section de réception des matières fécales (8) arrière avec ouverture supérieure et inférieure, dans lequel la section de réception des matières fécales (8) et la section de collecte d'urine (4) sont réalisées d'un seul tenant,
la cassette (120) des toilettes à cassette est remplacée par un agencement de récipients (20), dans lequel l'agencement de récipients (20) est configuré pour être logé dans l'espace de réception de cassette et présente un récipient à matières fécales (22) avec une ouverture supérieure (24) et un réservoir d'urine (28) avec une ouverture de réservoir (30), dans lequel l'agencement de récipients (20) est configuré en outre de telle sorte qu'après son introduction dans l'espace de réception de cassette, l'ouverture supérieure (24) du récipient à matières fécales (22) se trouve sous l'ouverture inférieure (10) de la section de réception des matières fécales (8), et
un tuyau est relié à l'ouverture de sortie (6) de la section de collecte d'urine (4) de la partie cuvette de siège (2) et à l'ouverture de réservoir (30) du réservoir d'urine (28).

7. Utilisation d'un kit selon l'une quelconque des revendications précédentes 1 à 5 pour la transformation de toilettes à cassette en toilettes sèches à séparation.
